# EUROPEAN PATENT SPECIFICATION

(11) **EP 3 517 428 B1**
(45) Date of publication and mention of the grant of the patent: **06.10.2021**
(21) Application number: 18400003.2
(22) Date of filing: 26.01.2018
(51) Int. Cl.: B64C 11/00, B64C 27/20, B64D 33/02

(54) **A SHROUDING FOR INTERACTING WITH AT LEAST ONE ROTOR ASSEMBLY**
UMMANTELUNG ZUR INTERAKTION MIT MINDESTENS EINER ROTORANORDNUNG
ENVELOPPE POUR INTERAGIR AVEC AU MOINS UN ENSEMBLE DE ROTOR

(43) Date of publication of application: 31.07.2019
(73) Proprietor: AIRBUS HELICOPTERS DEUTSCHLAND GmbH, 86609 Donauwörth (DE)
(72) Inventor: Reichensperger, Christian, 86663 Asbach Bäumenheim (DE); Blacha, Martin, 86609 Donauwörth (DE)
(74) Representative: GPI & Associés

(56) References cited:
- EP-A2- 2 193 993
- WO-A1-2014/120019
- DE-C- 965 621
- US-A- 2 948 111
- US-B1- 7 712 701
- US-B1- 8 167 234

## Description

The invention is related to a multirotor aircraft comprising a plurality of thrust producing units, each thrust producing unit of the plurality of thrust producing units comprising at least one rotor assembly and a shrouding. The prior art is illustrated by documents US-B1-7712701, EP-A2-2193993 and US-B1 -8167234.

Aircrafts are generally equipped with one or more thrust producing units that are provided for producing thrust in a predetermined direction during operation of the aircraft. In general, each thrust producing unit includes one or more rotors or propellers, which are frequently enclosed in an associated duct or shroud in order to increase a respectively produced thrust of a given thrust producing unit at constant required power. Thus, a respective rotor or propeller induced velocity can be used to generate thrust also from the duct or shroud.

In general, ducts or shrouds are defined by enclosed, annular surfaces that are arranged around associated rotors or propellers in order to improve respective aerodynamics and performances of the associated rotors or propellers. In addition, such ducts or shrouds are provided for protecting respective rotor or propeller blades of the associated rotors or propellers from undesired impacts during flight, such as e. g. bird strikes, as well as on ground or during hovering in very low distance to ground, where close obstacles on ground could be hit. Accordingly, such ducts or shrouds are usually confronted with the following problems: robustness, damage tolerance, weight, stiffness, strength and stability, integration, noise reduction, as well as production costs and manufacturability.

Robustness and damage tolerance are problems that arise from the fact that by definition at least a part of a respective surface of a given duct or shroud is usually located at an outer surface, i. e. on the exterior of a given aircraft. This outer surface, however, may be subjected to accidental damaging due to incorrect handling, inappropriate maintenance and misuse, as well as due to harsh environmental conditions, such as hail, bird, or debris impacts. Accordingly, robustness and damage tolerance are one of the main design and weight drivers in the development of ducts or shrouds, especially when using composite parts.

An additional requirement with respect to robustness and damage tolerance emanates from the fact that usually a very small gap between a respective duct surface and associated rotor blades of a given rotor or propeller that is arranged in the duct or shroud is required to increase an underlying aerodynamic efficiency of the rotor or propeller. However, for load cases inducing a high deformation due to respectively applied loads, this gap between the rotor blades and the duct surface may decrease and even become zero, or in extreme cases the rotor blades may even hit and, consequently, damage the duct surface.

The weight, stiffness, strength and stability problems are mainly associated with a possible loading of a given duct or shroud due to an aerodynamic pressure, as the ducts or shrouds are lift creating/increasing elements. These loads, which may also be referred to as "aerodynamic loads", are surface loads which may sum up to significant lift forces in total. In addition, these aerodynamic loads have to be reacted at respective interfaces where a given duct or shroud is attached to an airframe of a given aircraft.

More specifically, on the one hand stiffness and stability are mandatory for a duct or shroud in order to enable provision of a geometric shape that is required for a respective aerodynamic flow and to enable provision of a required clearance between respective rotor blades of the rotor or propeller and an associated duct surface. On the other hand, an underlying mass of the duct or shroud should preferably be minimized, although especially for complex shapes and curved load paths in structures, large parts, which mostly suffer from local instability, usually show considerably high deformations. For those structures or geometries, which usually show a high surface-to-volume ratio, conventional lightweight designs such as stringers, beads or sandwich structures are comparatively inefficient, especially if additional requirements such as e. g. the robustness, integration and cost-effective production are applied.

The problem of integration is based on the fact that generally highly loaded and comparatively big structural parts are difficult to integrate. More specifically, in case of a duct or shroud installation, respective mainly loaded elements, such as the duct or shroud itself and an associated structure that is provided for taking over occurring engine and rotor loads, are in general geometrically intersecting. This is particularly relevant if a given duct or shroud is additionally supported not only by a single motor beam, but also by additional stator beams. Therefore, this usually leads in conventional designs to a considerable weight increase, as reinforcements at respective intersecting areas are required in order to cope with local weakening of the cross-sections.

In addition, installation of electrical harnesses, cooling pipes and other equipment in a given duct or shroud is another aspect related to the problem of integration. In analogy to provisions required for primary structures, an underlying main load path of the given duct or shroud must frequently be cut for cable routings etc. Harnesses are usually also running inside of a respective structure of the given duct or shroud for aerodynamic and safety reasons. This makes the installation of cables and cable routings as well as harnesses even more difficult, as the accessibility is usually limited, so that the problem of integration is amplified.

The problem of noise reduction is generally based on the fact that rotors and propellers, especially when operated in counter rotating mode, create a significant level of noise which is nowadays a critical topic for certification and customer acceptance. In this respect, it should be noted that conventional ducts or shrouds are usually designed as rigid load carrying structural items in order to enable an improved rigidity and strength. However, the requirement of rigidity and strength usually is in conflict with noise reduction efforts, where normally soft surfaces with dampening properties are preferred.

Furthermore, production costs and manufacturability are problems that consist in the requirement of providing a highly efficient duct or shroud in general. Therefore, an underlying duct or shroud design is usually based on a freeform, or at least a double curved path, whose outer surface must be stiffened in order to provide a required stiffness at least in terms of buckling. However, particularly for aerospace grade parts that are manufactured mostly in rather small aerospace lot sizes, this requirement results in high production costs. In addition, integration of harnesses as described above, which is typically made in a respective assembly line, further drives underlying production costs up.

Conventional ducts or shrouds generally cope with one or more of the above-described problems. However, there is currently no concept available that is suitable to cope with all of the above-described problems.

More specifically, conventional ducts or shrouds are usually provided with a stiff outer skin that is either stiffened by an internal framework, such as a conventional frame-stringer system, or by beads, or by being implemented as a sandwich design where the outer skin is part of an underlying load carrying structure. A respective outer surface of the stiff outer skin usually serves as a load carrying structure apart from a respective "running surface" of the rotor or propeller, where usually an ablative, non-load carrying layer is applied.

The conventional ducts or shrouds are, thus, implemented based on a design principle that is well-known for aviation primary structural elements in general, i. e. not only for ducts or shrouds, but also for fuselages and wings of aircrafts. This well-known design principle that somewhat defines a "standard" design concept offers in most areas of application a comparatively effective structure, as it enables a comparatively efficient utilization of material and, in most cases, a satisfactory moment of inertia.

Nevertheless, this design principle has already been developed almost one century ago for fuselage and wing structures and was optimized since then only for this area of application. In parallel, needs of structural components that are required for manufacturing ducts or shrouds and which are usually currently used in manufacturing of ducts and shrouds, were merely copied from these design principles and transferred resp. translated to manufacturing of individual duct geometries, which were to be implemented, but the design principle as such was not optimized with respect to manufacturing of ducts or shrouds. However, as described above, all problems related to underlying requirements of ducts or shrouds result in a significantly more complex optimization task and leads, thus, to a redefinition of an "optimized" design principle for ducts or shrouds. This is the reason why conventional ducts or shrouds merely cope with part of the above-described problems, but not with all of these problems.

Even in currently advancing multicopter developments, where ducted or shrouded rotors or propellers are applied, respective design principles of given ducts or shrouds are neglected, as an underlying design focus is mostly related to an overall vehicle architecture. This likewise applies to ducts or shrouds of other aircrafts, such as e. g. so-called Fenestron ducts or shrouds in helicopters, or turbine engine ducts or shrouds in airplanes or convertiplanes, or ducted fans in e. g. landing craft air cushions, which are all well-known applications. This likewise applies to still other currently suggested duct or shroud designs, such as e. g. in ducts or shrouds of currently occurring exoskeletons or other aerospace fans, which are also well-known ducts or shrouds.

Independent of the above-described ducts or shrouds, the prior art also describes application of foam to structural load carrying elements. By way of example, the document US 5,642,982 describes a variable diameter rotor with rotor blades that comprise a movable outboard blade section which telescopes over an inboard blade section along an associated longitudinal axis. The outboard blade section includes a spar member which is enveloped by a leading-edge shaft and a foam-filled trailing edge pocket assembly to define a requisite aerodynamic contour of the outboard blade section. In other words, the foam-filled trailing edge pocket assembly defines a load carrying outer surface element, wherein foam is included. This component is, however, merely placed at the trailing edge of a given rotor blade.

The document WO 2008/003330 A1 describes a deformable trailing edge section of a wind turbine blade. The deformable trailing edge section is formed in a deformable material, in particular foam. In other words, the portion of the wind turbine blade that is formed with the foam is provided for being deformable, i. e. weak. A similar structure is described in the document RU 66301 U1.

The document DE 79 12 264 U1 describes, in contrast thereto, an aft portion of a car having a load carrying structure that defines an aerodynamic surface and that is partly surrounded by a secondary structure made of foam.

The document US 7 712 701 B1 describes an unmanned aerial vehicle having counterrotating ducted rotors that are driven by electric motors. The unmanned aerial vehicle is configured as a modular system, which enhances portability by humans and allows repair and refit of the unmanned aerial vehicle that is tailored for a particular application. The unmanned aerial vehicle includes a shroud that is concentric about an axis, with the shroud including a plurality of shroud sections each of which is separately detachable from the unmanned aerial vehicle. Each shroud section forms a module that contains elements used in an operation of the unmanned aerial vehicle. Each shroud section is made from durable, lightweight material. The shroud sections are designed to be non-destructively detachably connected to a frame to allow disassembly of the vehicle to increase portability, and to allow shroud sections to be removed and replaced by other shroud sections or to be repaired.

The document DE 965 621 C describes a transverse body, in particular a tubular wing. The transverse body comprises an inner and an outer wall which are subjected to a flow, particularly a gas flow. The transverse body comprises a supporting skeleton, which is preferably made of metal, and a light and rigid filling material. When both inner and outer walls of the transverse body are curved, the skeleton is completely covered by the filling material.

The document WO 2014/120019 A1 describes propulsion units for propulsion and manoeuvring of a maritime vessel. A leading edge on an inlet of a nozzle of the propulsion units is exchangeable, so that a hydrodynamic shape of the leading edge can be changed due to operating profiles or damages. The leading edge is formed by a metallic front ring being integrated with stays for supporting a propeller section. The leading edge further includes a sectioned part which forms the hydrodynamic shape of the inlet. The sectioned part is formed by a low-weight non-metallic material. The metallic front ring is arranged between a main part of the nozzle and the sectioned part forming the hydrodynamic shape of the inlet. The leading edge section parts are shaped in such a way as to allow for arrangement to the metallic front ring and for providing a smooth curved surface from an outer to an inner surface of the nozzle.

The document EP 2 193 993 A2 describes an unmanned aerial vehicle that is capable of vertical take-offs and landings with one or more ducted fans as a propulsion system. The unmanned aerial vehicle comprises ducted fan assemblies that are interconnected via a duct linkage assembly. Each ducted fan assembly includes a lightweight aerodynamic duct lip that is structurally supported by a structurally rigid duct ring extending around an outer circumference of the duct lip.

In summary, although the above-described prior art is related to various different ducts or shrouds and although various different materials are known in the art that are used with aerodynamic structures in general, underlying design principles are not readily available for implementing an improved duct or shroud for interacting with a rotor or propeller in an aircraft. In particular, the prior art does not describe any combination of materials and/or design principles that allow to create a duct or shroud that copes at least with most of the above-described problems.

It is, therefore, an object of the present invention to provide a new multirotor aircraft comprising a plurality of thrust producing units, each thrust producing unit of the plurality of thrust producing units comprising at least one rotor assembly and a shrouding for interacting with the at least one rotor assembly, wherein the shrouding is suitable to overcome the above-described drawbacks at least mostly.

This object is solved by a multirotor aircraft comprising a plurality of thrust producing units, each thrust producing unit of the plurality of thrust producing units being inclined in a lateral direction of the multirotor aircraft and comprising at least one rotor assembly, and a shrouding. The shrouding is surrounding the rotor assembly in circumferential direction and forms an air duct that is associated with the at least one rotor assembly and axially delimited by an air inlet region and an air outlet region. A main aerodynamic load carrying primary structure and a stiffening secondary structure that completely encapsulates the main aerodynamic load carrying primary structure are provided. The stiffening secondary structure comprises at least one inflexible lightweight volume material and is provided at least for reducing elastic movements of the main aerodynamic load carrying primary structure under loading conditions.

It should be noted that the term "shrouding" should be understood as encompassing simultaneously the terms "duct" and "shroud". In other words, in the context of the present invention, the term "shrouding" refers interchangeably to a duct or a shroud.

The main load carrying primary structure can be made of any suitable material, such as e. g. metal, plastic, and/or fiber reinforced polymers. The main load carrying primary structure advantageously defines a main load path for lifting forces, in particular aerodynamic lifting forces, and provides a global stiffness of the shrouding. On top this main load carrying primary structure carries bending and torsional loads that occur in response to aerodynamic loads, gravity and inertia forces.

The stiffening secondary structure is a structure that completely surrounds the main load carrying primary structure and that is made of any suitable non-flexible respectively inflexible, e. g. rigid lightweight volume material, such as e. g. foam, gradient foam, balsa wood and so on. The stiffening secondary structure advantageously provides an actual aerodynamic and functional outer volume of the inventive shrouding up until a respective outer surface thereof. An important feature of the rigid lightweight volume material is its inflexibility, as one of its main functions is to provide enough stiffness for the main load carrying primary structure. Thus, any out-of-plane deformation that is perpendicular to the outer surface of the main load carrying primary structure is at least hindered. This is advantageous for suppressing any elastic secondary deformation so that an occurring overall deformation of the inventive shrouding as such is comparatively low.

Advantageously, aerodynamic loads that are acting on the inventive shrouding under loading conditions are acting directly on an outer surface of the inventive shrouding and the inflexible lightweight volume material transfers these aerodynamic loads to the main load carrying primary structure. By their nature, aerodynamic loads are locally rather low, but generally sum up to comparatively big magnitudes on the complete outer surface of the stiffening secondary structure as a resulting force. Therefore, an underlying design principle of the inventive shrouding consists in choosing a relative stiffness of the inflexible lightweight volume material's Young's moduli in a way that the main load carrying primary structure is stiff compared to any secondary structural items, i. e. in particular the stiffening secondary structure.

Preferably, the main load carrying primary structure and/or the stiffening secondary structure is "sealed" or enclosed by a completely non-load carrying layer, such as a foil or surface finish, in order to protect the inflexible lightweight volume material or to achieve a desired dedicated surface state with respect to hardness, smoothness, water tightness, micro-structure for influencing a respective airflow through the inventive shrouding, porosity for dedicated acoustic noise influencing, and so on.

The main load carrying primary structure of the inventive shrouding is completely encapsulated resp. surrounded by a non-load carrying secondary structure, i. e. the stiffening secondary structure, which provides protection of the main load carrying primary structure. Thus, a comparatively high damage tolerance can be achieved, as even if the stiffening secondary structure is completely broken and/or damaged, there would be no detrimental effect on the main load carrying primary structure itself. Consequently, even if the complete stiffening secondary structure is broken, e. g. because of a damage case, or in an extreme scenario fully removed from the main load carrying primary structure, there is no impact on a respective main load path.

The inflexible lightweight volume material of the stiffening secondary structure that completely encapsulates the main load carrying primary structure provides, due to its comparatively low stiffness, a comparatively "soft" member that is suitable to dissipate energy in case of an undesired impact, e. g. if an obstacle is hit by the inventive shrouding, e. g. during hovering with low forward, backward, or sideward speed in case that the inventive shrouding is used with an aircraft. This "soft" member reduces respective peak forces of such an impact significantly and increases a respective area of contact at the same time. Consequently, any effect resulting from hitting the obstacle is advantageously minimized and spread to a bigger area at the same time, which makes the impact much less severe, increases safety, and offers weight saving opportunities due to reduced stress levels and energy absorption. This is also valid for bird strike scenarios.

Furthermore, the main load carrying primary structure cannot be damaged in everyday use, so that the common sizing criteria, which takes scratches, barely visible impact damages, corrosion etc. into account, may simply be skipped. As a result, respective limits of material strength can be reached much closer. This, again, results in a beneficial weight saving.

Advantageously, the main load path of the main load carrying primary structure is arranged together with the load carrying structure of the thrust producing unit, i. e. an associated motor/rotor/propeller system in a way that both structural items do not intersect and, thus, no complex interfaces or structural reinforcements need to be provided. This simplifies adaptions of an underlying design principle and provides more space for system installation. Furthermore, this improves accessibility for included wirings, routings, and so on.

Advantageously, the stiffening secondary structure may even be manufactured out of separated sections, which may then be assembled without any structural connection. Thus, smaller manufacturing machines can be used and smaller raw material sizes can be ordered and are required. Consequently, a respective handling can be simplified, which also reduces costs.

The outer surface of the inventive shrouding may be provided such that it exhibits a defined porosity, micro-structure, smoothness, and so on. Thus, a respective aerodynamic noise resulting from rotor or propeller tips of a rotor or propeller arranged within the inventive shrouding, or a respective air flow created at an inner surface of the shrouding, can be controlled and/or reduced in a suitable manner.

Advantageously, an underlying shape of the main load carrying primary structure, which is in general costly, can be adapted to any convenient cost-saving shape, i. e. using benefits from rotational symmetry, circular shapes instead of complex shapes of any geometry, and so on. Respective smaller parts are simpler in handling and exhibit reduced weights and size, and can be exchanged respectively replaced more easily during corresponding manufacturing processes.

In summary, as no barely visible damages to the main load carrying primary structure may occur, underlying inspection intervals can be prolonged, thus, resulting in decreased maintenance cost. Furthermore, any repair of a possible damage in the stiffening secondary structure is generally cheaper than a structural repair of the main load carrying primary structure. As almost all damages on the inflexible lightweight volume material of the stiffening secondary structure may be regarded as cosmetic, only very limited design and stress support is necessary for inservice repairs.

Moreover, on top changes of an overall outer aerodynamic shape of the inventive shrouding are related to its outer shape, i. e. to the stiffening secondary structure, and advantageously do not affect the main load carrying primary structure. This simplifies the implementation of late changes of the inventive shrouding during implementation in a respective development phase and even provides space for customer adaptations of future improvements of the aerodynamic shape. In this way, a separation between outer shape of the stiffening secondary structure and the main load carrying primary structure even allows to decouple the outer shape of the stiffening secondary structure from its function as structural element. This is e. g. particularly advantageous for enabling a simplified testing phase during a flight test campaign, when a best outer aerodynamic shape has to be found and to be integrated/tested quickly.

According to a preferred embodiment, the at least one inflexible lightweight volume material comprises at least one of foam, gradient foam or balsa wood.

According to a further preferred embodiment, the main load carrying primary structure comprises at least one main load carrying ring.

According to a further preferred embodiment, the at least one main load carrying ring is hollow.

According to a further preferred embodiment, the at least one main load carrying ring comprises metal, plastic and/or fiber reinforced polymers.

According to a further preferred embodiment, the stiffening secondary structure is rigidly attached to the main load carrying primary structure for enabling transfer of normal and shear loads from the stiffening secondary structure to the main load carrying primary structure.

According to a further preferred embodiment, the stiffening secondary structure is rigidly attached to the main load carrying primary structure by means of structural bonding, co-bonding, welding, and/or in-situ application of the stiffening secondary structure or the main load carrying primary structure.

According to a further preferred embodiment, the stiffening secondary structure comprises a shaping that provides predetermined aerodynamic properties to the air duct.

According to a further preferred embodiment, an outer covering layer that encapsulates the main load carrying primary structure and the stiffening secondary structure at least partly is provided.

According to a further preferred embodiment, the outer covering layer is provided for protecting at least the stiffening secondary structure against environmental impacts and/or for obtaining at least a predetermined surface state of the stiffening secondary structure.

According to a further preferred embodiment, the predetermined surface state is based on at least one of a predefined hardness, smoothness, water tightness, airflow influencing micro-structure and/or acoustic noise influencing porosity.

According to a further preferred embodiment, the outer covering layer is a non-load carrying foil or surface finish.

According to a further preferred embodiment, the stiffening secondary structure comprises a plurality of weight reducing holes and/or cavities for reducing weight of the shrouding.

According to a further preferred embodiment, an upper shrouding component and a lower shrouding component that is spaced apart from the upper shrouding component in height direction of the air duct are provided. Each one of the upper shrouding component and the lower shrouding component are provided with the main load carrying primary structure and the stiffening secondary structure that completely encapsulates the main load carrying primary structure.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a multirotor aircraft with a plurality of exemplary thrust producing units,
- Figure 2 shows a top view of the multirotor aircraft of Figure 1,
- Figure 3 shows a side view of the multirotor aircraft of Figure 1 and Figure 2 during forward flight,
- Figure 4 shows a front view of the multirotor aircraft of Figure 3,
- Figure 5 shows a perspective view of a thrust producing unit of the multirotor aircraft of Figure 1 to Figure 4 with an illustrative shrouding, not covered by the claimed invention,
- Figure 6 shows a perspective view of a main load carrying primary structure of the shrouding of Figure 5,
- Figure 7 shows a cut view of the shrouding of Figure 5,
- Figure 8 shows a cut view of a section of the thrust producing unit of Figure 5 with an associated rotor assembly,
- Figure 9 shows cut views of a section of the shrouding of Figure 5, for illustrating exemplary variants of the shrouding,
- Figure 10 shows a cut view of a section of the shrouding of Figure 5 according to still another variant,
- Figure 11 shows a cut view of a section of the shrouding of Figure 5 according to still another variant,
- Figure 12 shows views of the shrouding of Figure 5 according to still another variant,
- Figure 13 shows views of the shrouding of Figure 5 according to still another variant,
- Figure 14 shows cut views of a section of the shrouding of Figure 5, for illustrating still other variants of the shrouding,
- Figure 15 shows a perspective view of the shrouding of Figure 5 with an exemplary motor/gearbox fairing, and
- Figure 16 shows views of the shrouding of Figure 5 according to still another variant.

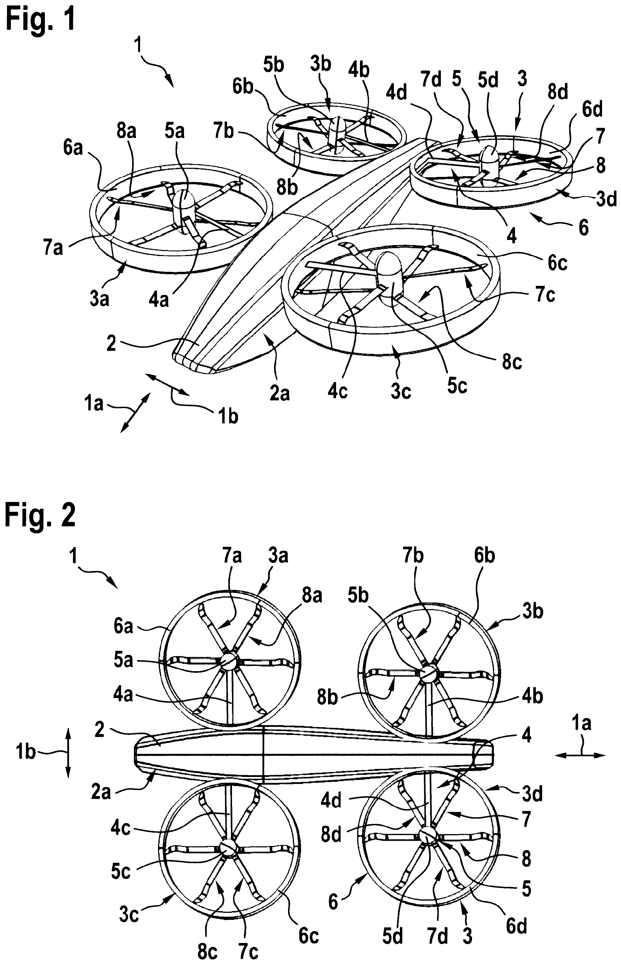

Figure 1 shows an exemplary multirotor aircraft 1 with an aircraft airframe 2. The aircraft airframe 2 defines a supporting structure that is also referred to hereinafter as the fuselage of the multirotor aircraft 1.

The fuselage 2 has an extension in longitudinal direction 1a and an extension in lateral direction 1b and preferably defines an internal volume 2a that is at least adapted for transportation of passengers, so that the multirotor aircraft 1 as a whole is adapted for transportation of passengers. The internal volume 2a is preferably further adapted for accommodating operational and electrical equipment, such as e. g. an energy storage system that is required for operation of the multirotor aircraft 1.

It should be noted that exemplary configurations of the internal volume 2a that are suitable for transportation of passengers, but also for accommodation of operational and electrical equipment, are readily available to the person skilled in the art and generally implemented to comply with applicable authority regulations and certification requirements regarding passenger transportation. Thus, as these configurations of the internal volume 2a as such are not part of the present invention, they are not described in detail for brevity and conciseness.

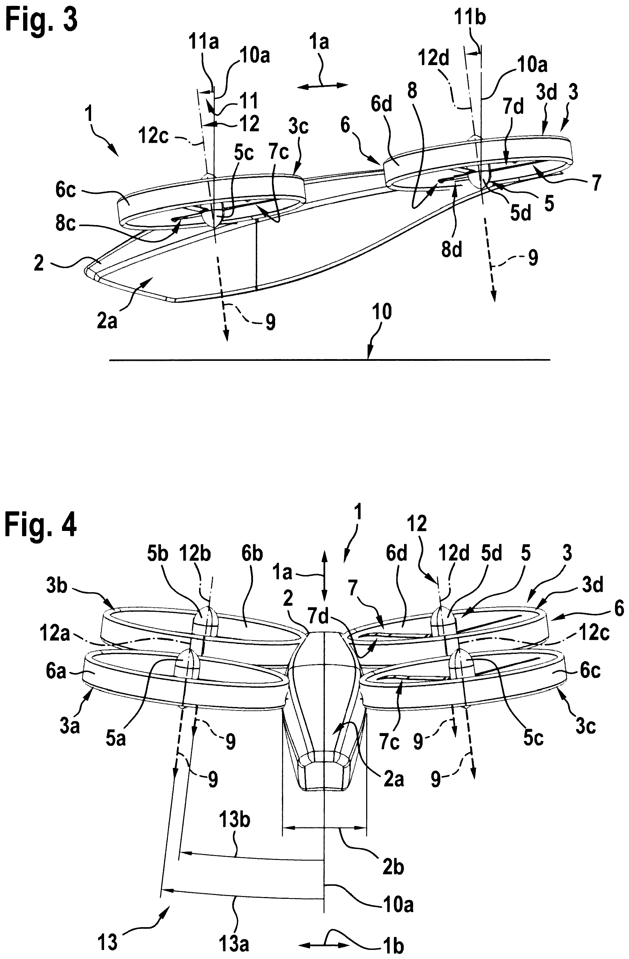

According to one aspect, the multirotor aircraft 1 comprises a plurality of thrust producing units 3. Preferably, the plurality of thrust producing units 3 comprises at least two and preferentially four thrust producing units 3a, 3b, 3c, 3d. The thrust producing units 3a, 3b, 3c, 3d are embodied for producing thrust (9 in Figure 3) in operation, such that the multirotor aircraft 1 is able to hover in the air as well as to fly in any forward or rearward direction.

Preferably, the thrust producing units 3a, 3b, 3c, 3d are structurally connected to the fuselage 2. By way of example, this is achieved by means of a plurality of structural supports 4. More specifically, the thrust producing unit 3a is preferably connected to the fuselage 2 via a structural support 4a, the thrust producing unit 3b via a structural support 4b, the thrust producing unit 3c via a structural support 4c and the thrust producing unit 3d via a structural support 4d, wherein the structural supports 4a, 4b, 4c, 4d define the plurality of structural supports 4.

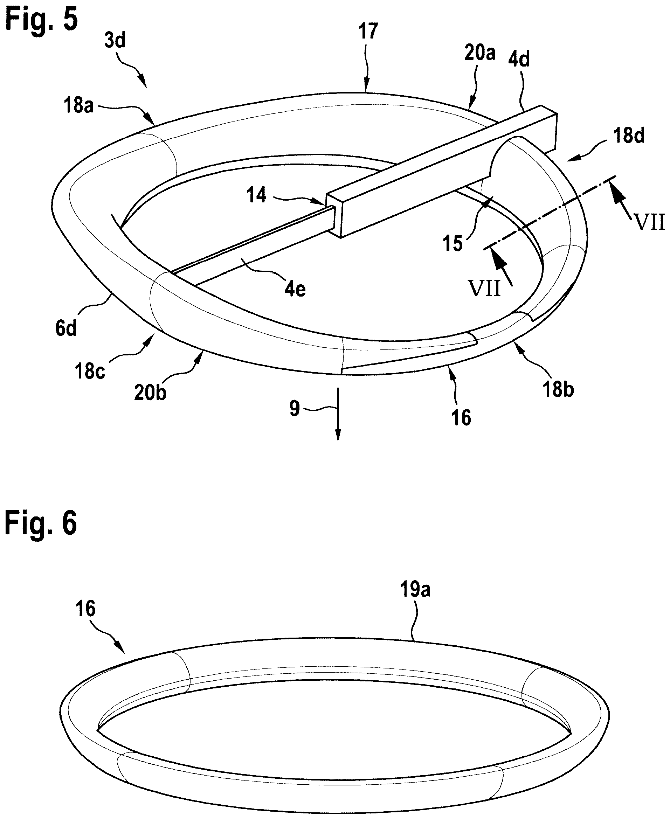

Preferably, at least one of the thrust producing units 3a, 3b, 3c, 3d comprises an associated shrouding in order to improve underlying aerodynamics and to increase operational safety. By way of example, a plurality of shrouding units 6 is shown with four separate shroudings 6a, 6b, 6c, 6d. Illustratively, the shrouding 6a is associated with the thrust producing unit 3a, the shrouding 6b with the thrust producing unit 3b, the shrouding 6c with the thrust producing unit 3c and the shrouding 6d with the thrust producing unit 3d. According to one aspect, the shroudings 6a, 6b, 6c, 6d have a complex geometry, such as e. g. described below with reference to Figure 5.

Furthermore, the shroudings 6a, 6b, 6c, 6d can be connected to the fuselage 2 together with the structural supports 4a, 4b, 4c, 4d, in order to reinforce the connection between the thrust producing units 3a, 3b, 3c, 3d and the fuselage 2. Alternatively, only the shroudings 6a, 6b, 6c, 6d can be connected to the fuselage 2.

According to one aspect, at least one and, preferably, each one of the thrust producing units 3a, 3b, 3c, 3d is equipped with at least one and, preferably, at least two rotor assemblies. By way of example, the thrust producing unit 3a is equipped with two rotor assemblies 7a, 8a, the thrust producing unit 3b is equipped with two rotor assemblies 7b, 8b, the thrust producing unit 3c is equipped with two rotor assemblies 7c, 8c and the thrust producing unit 3d is equipped with two rotor assemblies 7d, 8d. The rotor assemblies 7a, 7b, 7c, 7d illustratively define a plurality of upper rotor assemblies 7 and the rotor assemblies 8a, 8b, 8c, 8d illustratively define a plurality of lower rotor assemblies 8.

The plurality of upper and lower rotor assemblies 7, 8 is preferably connected to the plurality of structural supports 4 by means of a plurality of gearbox fairings 5. Illustratively, the upper and lower rotor assemblies 7a, 8a are connected to the structural support 4a by means of a gearbox fairing 5a, the upper and lower rotor assemblies 7b, 8b are connected to the structural support 4b by means of a gearbox fairing 5b, the upper and lower rotor assemblies 7c, 8c are connected to the structural support 4c by means of a gearbox fairing 5c and the upper and lower rotor assemblies 7d, 8d are connected to the structural support 4d by means of a gearbox fairing 5d.

Preferably, each one of the upper rotor assemblies 7a, 7b, 7c, 7d defines an associated upper rotor plane and each one of the lower rotor assemblies 8a, 8b, 8c, 8d defines an associated lower rotor plane. Preferably, the upper and lower rotor assemblies 7a, 7b, 7c, 7d, 8a, 8b, 8c, 8d define pairs of upper and lower rotor assemblies 7a, 8a; 7b, 8b; 7c, 8c; 7d, 8d that are accommodated in the shroudings 6a, 6b, 6c, 6d, respectively, so that the associated upper and lower rotor planes are located inside the shroudings 6a, 6b, 6c, 6d of the multirotor aircraft 1.

It should be noted that although the multirotor aircraft 1 is illustrated and described above with reference to a multirotor structure with multiple rotor assemblies, it could likewise be implemented as a multipropeller structure with multiple propeller assemblies or as a multipropeller and -rotor structure. More specifically, while rotors are generally fully articulated, propellers are generally not articulated at all. However, both can be used for generating thrust and, thus, for implementing the thrust producing units according to the present invention. Consequently, any reference to rotors or rotor structures in the present application should likewise be understood as a reference to propellers and propeller structures, so that the multirotor aircraft 1 can likewise be implemented as a multipropeller and/or multipropeller and -rotor aircraft.

Figure 2 shows the multirotor aircraft 1 of Figure 1 with the thrust producing units 3a, 3b, 3c, 3d that are connected to the fuselage 2. The thrust producing units 3a, 3b, 3c, 3d respectively comprise the upper and lower rotor assemblies 7a, 7b; 7b, 8b; 7c, 8c; 7d, 8d, which are preferably arranged in a side-by-side configuration with congruent rotor axes (12 in Figure 3 and Figure 4). Preferentially, the upper rotor assemblies 7a, 7b, 7c, 7d are arranged above the lower rotor assemblies 8a, 8b, 8c, 8d such that the upper and lower rotor assemblies 7a, 7b; 7b, 8b; 7c, 8c; 7d, 8d are stacked, i. e. arranged on top of each other with congruent rotor axes (12 in Figure 3 and Figure 4). However, alternative configurations are likewise contemplated, such as e. g. axially displaced rotor axes.

As can further be seen from Figure 2, the thrust producing units 3a, 3b, 3c, 3d are all exemplarily arranged laterally with respect to the fuselage 2, i. e. on the left or right side of the fuselage 2 seen in its longitudinal direction 1a. Illustratively, the left side corresponds to the lower side and the right side to the upper side of the fuselage 2 as shown in Figure 2. Furthermore, the fuselage 2 is exemplarily embodied such that the laterally arranged thrust producing units 3a, 3b, 3c, 3d define at least approximately a trapezoidal shape.

However, it should be noted that this exemplary arrangement is only described by way of example and not for limiting the present invention thereto. Instead, other arrangements are also possible and likewise contemplated. For instance, two of the thrust producing units 3a, 3b, 3c, 3d can respectively be arranged at a front and rear section of the fuselage 2, and so on.

Figure 3 shows the multirotor aircraft 1 of Figure 1 and Figure 2 in an exemplary operating mode. In this exemplary operating mode, the plurality of thrust producing units 3 produces airstreams in a thrust producing airstream direction 9 by means of the plurality of upper and/or lower rotor assemblies 7, 8, which are suitable to lift the multirotor aircraft 1 off ground 10.

Each one of the plurality of upper rotor assemblies 7 defines a first rotor axis and each one of the plurality of lower rotor assemblies 8 defines a second rotor axis. Preferably, the first and second rotor axes are respectively congruent, i. e. coaxially arranged, so that the plurality of upper and lower rotor assemblies 7, 8 define a plurality of coaxially arranged rotor axes 12. Illustratively, the upper and lower rotor assemblies 7c, 8c define first and second congruent rotor axes, which are commonly referred to as the rotor axis 12c, and the upper and lower rotor assemblies 7d, 8d define first and second congruent rotor axes, which are commonly referred to as the rotor axis 12d.

However, other configurations are likewise contemplated. E. g. the rotor axes can be arranged in parallel to each other, and so on.

Preferably, the plurality of thrust producing units 3 is inclined in the longitudinal direction 1a of the multirotor aircraft 1 by a plurality of longitudinal inclination angles 11 in order to increase the manoeuvrability of the multirotor aircraft 1 and to reduce an overall inclination in the longitudinal direction 1a of the multirotor aircraft 1 during forward flight. The plurality of longitudinal inclination angles 11 is illustratively defined between a vertical reference line 10a of the multirotor aircraft 1 and the plurality of coaxially arranged rotor axes 12. Preferably, a possible and realized number of the plurality of longitudinal inclination angles 11 depends on an underlying number of provided thrust producing units.

More specifically, according to one aspect, at least one of the plurality of thrust producing units 3 is inclined in the longitudinal direction 1a of the multirotor aircraft 1 by a first longitudinal inclination angle defined between a vertical reference line 10a of the multirotor aircraft 1 and the first and second congruent rotor axes of this at least one of the plurality of thrust producing units 3. Illustratively, the thrust producing unit 3c of the plurality of thrust producing units 3 is inclined by a first longitudinal inclination angle 11a defined between the vertical reference line 10a and the rotor axis 12c. However, it should be noted that the thrust producing unit 3a of the plurality of thrust producing units 3 of Figure 1 and Figure 2 is preferably also inclined by the first longitudinal inclination angle 11a.

According to one aspect, at least one of the plurality of thrust producing units 3 is inclined in the longitudinal direction 1a of the multirotor aircraft 1 by a second longitudinal inclination angle defined between the vertical reference line 10a and the first and second congruent rotor axes of this at least one of the plurality of thrust producing units 3. Illustratively, the thrust producing unit 3d of the plurality of thrust producing units 3 is inclined by a second longitudinal inclination angle 11b defined between the vertical reference line 10a and the rotor axis 12d. However, it should be noted that the thrust producing unit 3b of the plurality of thrust producing units 3 of Figure 1 and Figure 2 is preferably also inclined by the second longitudinal inclination angle 11b.

Figure 4 shows the multirotor aircraft 1 with the fuselage 2 of Figure 3, which illustratively comprises a width 2b. The latter is defined as a maximum distance measured orthogonally to the longitudinal direction 1a of the multirotor aircraft 1 between the respective outmost left hand and right-hand side surfaces of the fuselage 2.

The multirotor aircraft 1 is again exemplarily shown in the operating mode of Figure 3, wherein the plurality of thrust producing units 3 produce airstreams in the thrust producing airstream direction 9 by means of the plurality of upper and lower rotor assemblies 7, 8. The upper and lower rotor assemblies 7c, 8c define the rotor axis 12c and the upper and lower rotor assemblies 7d, 8d define the rotor axis 12d as described above with reference to Figure 3. Furthermore, the upper and lower rotor assemblies 7a, 8a exemplarily define first and second congruent rotor axes, which are commonly referred to as the rotor axis 12a, and the upper and lower rotor assemblies 7b, 8b define first and second congruent rotor axes, which are commonly referred to as the rotor axis 12b.

The plurality of thrust producing units 3 is inclined in the lateral direction 1b of the multirotor aircraft 1 by a plurality of lateral inclination angles 13 in order to provide reduced gust sensitivity and to increase the manoeuvrability of the multirotor aircraft 1. The plurality of lateral inclination angles 13 is illustratively defined between the vertical reference line 10a of the multirotor aircraft 1 and the plurality of coaxially arranged rotor axes 12. Preferably, a possible and realized number of the plurality of lateral inclination angles 13 depends on an underlying number of provided thrust producing units.

More specifically, according to one aspect, at least one of the plurality of thrust producing units 3 is inclined in the lateral direction 1b of the multirotor aircraft 1 by a first lateral inclination angle defined between the vertical reference line 10a of the multirotor aircraft 1 and the first and second congruent rotor axes of this at least one of the plurality of thrust producing units 3. Illustratively, the thrust producing unit 3a of the plurality of thrust producing units 3 is inclined by a first lateral inclination angle 13a defined between the vertical reference line 10a and the rotor axis 12a. However, it should be noted that the thrust producing unit 3c of the plurality of thrust producing units 3 of Figure 1 and Figure 2 is preferably also inclined by the first lateral inclination angle 13a.

According to one aspect, at least one of the plurality of thrust producing units 3 is inclined in the lateral direction 1b of the multirotor aircraft 1 by a second lateral inclination angle defined between the vertical reference line 10a of the multirotor aircraft 1 and the first and second congruent rotor axes of this at least one of the plurality of thrust producing units 3. Illustratively, the thrust producing unit 3b of the plurality of thrust producing units 3 is inclined by a second lateral inclination angle 13b defined between the vertical reference line 10a and the rotor axis 12b. However, it should be noted that the thrust producing unit 3d of the plurality of thrust producing units 3 of Figure 1 and Figure 2 is preferably also inclined by the second lateral inclination angle 13b.

Figure 5 shows the thrust producing unit 3d of the preceding figures, with its shrouding 6d, for further illustrating an exemplary configuration thereof. It should, however, be noted that the thrust producing units 3a, 3b, 3c of the preceding figures preferably comprise similar configurations, so that the thrust producing unit 3d is only described representative for all thrust producing units 3a, 3b, 3c, 3d, for brevity and conciseness.

It should further be noted that the thrust producing unit 3d with its shrouding 6d is illustrated in Figure 1 to Figure 4 and described above as being provided with the rotor assemblies 7d, 8d only by way of example. However, provision of both of the rotor assemblies 7d, 8d is not mandatory and provision of only one of both rotor assemblies 7d, 8d for interaction with the shrouding 6d is likewise contemplated. By way of example, it is assumed hereinafter that the shrouding 6d is provided for interaction with the rotor assembly 7d. Nevertheless, for simplicity and clarity of the drawings, the rotor assembly 7d is not shown in Figure 5.

The thrust producing unit 3d is preferably provided with at least one engine and/or engine fitting 14 that is preferably mounted to the structural support 4d. Furthermore, the at least one engine and/or engine fitting 14 is preferably mounted to the shrouding 6d by means of at least one associated stator beam 4e. The stator beam 4e attaches the shrouding 6d to the engine and/or engine fitting 14 and/or to the structural support 4d.

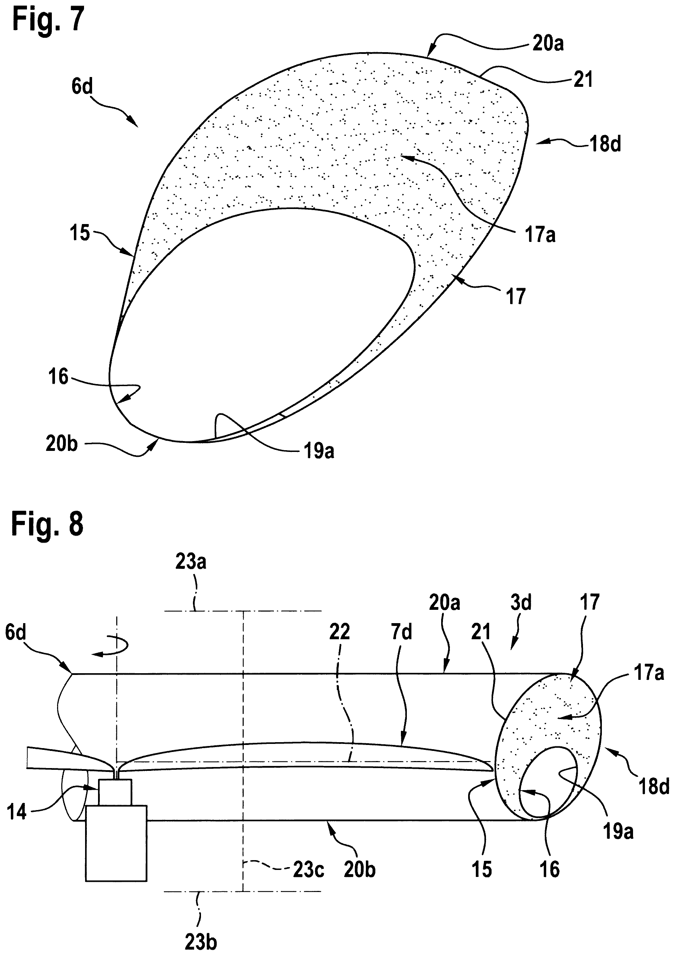

According to one aspect, the shrouding 6d forms an air duct 15 that is associated with the rotor assembly 7d of Figure 1 to Figure 4 and actually delimited by an air inlet region 20a and an air outlet region 20b. Illustratively, the shrouding 6d has a leading edge 18a and a trailing edge 18b, and forms lateral regions 18c, 18d. More specifically, the shrouding 6d preferably comprises a main load carrying primary structure 16 and a stiffening secondary structure 17. According to an embodiment that is not covered by the claimed invention, the stiffening secondary structure 17 encapsulates the main load carrying primary structure 16 at least partly. The stiffening secondary structure 17 preferably comprises at least one inflexible lightweight volume material (17a in Figure 7) and is provided at least for reducing elastic movements of the main load carrying primary structure 16 under loading conditions. According to one aspect, the at least one inflexible lightweight volume material (17a in Figure 7) comprises at least one of foam, gradient foam or balsa wood.

More generally, the shrouding 6b preferably exhibits an architecture that is based on a "multi-layer" design by providing at least two separate layers in radial direction of the shrouding 6d. This architecture of the shrouding 6d is particularly beneficial in aircraft applications, where the rotor assembly 7d of Figure 1 to Figure 4 is associated with the shrouding 6d and wherein the shrouding 6d is used with the thrust producing unit 3d of the aircraft 1 of Figure 1 to Figure 4.

According to one aspect, the shrouding 6d surrounds the rotor assembly 7d of Figure 1 to Figure 4 in circumferential direction just in a respective plane of the rotor assembly 7d or in its vicinity, i. e. above or below the rotor plane. A respective cross-sectional shape of the shrouding 6d can be selected arbitrarily, i. e. be of any shape, or can even be composed of several independent cross-sections. These cross-sections may have rotational symmetry along the circumference of the shrouding 6d, or not. Furthermore, the shrouding must not necessarily have a closed shape in circumferential direction, as illustrated in Figure 5, but may even be opened e. g. at its trailing edge 18b.

In general, a main geometric characteristic of the shrouding 6d is by definition and function its curved or preferentially almost circular shape around the rotor assembly 7d of Figure 1 to Figure 4 and its task of transferring mainly lifting loads to at least one dedicated load introduction point at the fuselage 2 of the aircraft 1 of Figure 1 to Figure 4, which is defined by the structural support 4d, or a respective payload compartment structural component which needs to be lifted. The curved shape of the shrouding 6d under loading conditions is, in consequence, subjected to bending and torsion loads. These loads and, even more, a respective load combination leads from a structure-mechanic point of view to a comparatively compliant mechanical system for reacting/transferring loads, as it generates a comparatively high deformation as elastic movement due to the applied loads. But especially when the shrouding 6d is used together with the rotor assembly 7d in an aircraft application, this kind of curved bending/torsion loaded structural component is required to be as rigid as possible due to aerodynamic requirements: the smaller a respective gap between tips of rotor blades of the rotor assembly 7d are with respect to the air duct 15, the more efficient the air duct 15 works in terms of generating lift force in combination with the rotor assembly 7d. But the more efficient this air duct 15 works, the more loads are applied to the air duct 15 and the bigger are respective elastic deformations under these loading conditions. If, e. g. the elastic secondary deformation of the air duct 15 under load is too big, the tips of the rotor assembly 7d may touch the shrouding 6d and either damage the shrouding 6d or get damaged themselves. Especially in case of an unintended contact with any static obstacle, e. g. with a pillar close to a respective landing side, or a bird strike during flight, the shrouding 6d is exposed to extreme loads and, consequently, extreme deformations which lead to an even bigger threat at first for the shrouding 6d, secondly the rotor blades of the rotor assembly 7d and finally to the aircraft 1 of Figure 1 to Figure 4.

It should be noted that all described scenarios are not only very costly in repair, but can also lead to a dangerous or even hazardous situation for the aircraft 1 of Figure 1 to Figure 4 in a worst-case situation. Consequently, a conventional aerodynamically efficient shrouding is usually very heavy and has a complex shape due to aerodynamic needs and, in consequence leads to a massive and expensive design and/or is inefficient, in contrast to the shrouding 6d.

As already described above, the function of the shrouding 6d is to make the rotor assembly 7d more efficient and/or to generate additional lift in general. In addition thereto, its secondary function consists in protecting the rotor assembly 7d in case of unintended contact with any obstacle, and also to reduce produced noise.

Therefore, the main load carrying primary structure 16 is arranged inside of an outer aerodynamic surface of the shrouding 6d, which is formed by the stiffening secondary structure 17. The cross-section of both, i. e. the main load carrying primary structure 16 and the air duct 15 that is defined by the stiffening secondary structure 17 can be of any shape. The space between the main load carrying primary structure 16 and the outer aerodynamic surface of the shrouding 6d is filled with the inflexible lightweight volume material (17a in Figure 7), which must not be soft or highly elastic, but as stiff or rigid as possible as it serves for the main load carrying primary structure 16 as a kind of support to reduce secondary elastic movements of the main load carrying primary structure 16 in radial direction of the shrouding 6d. Therefore, the inflexible lightweight volume material (17a in Figure 7) must be connected to the main load carrying primary structure 16 such that the elastic movement of the main load carrying primary structure 16 under loading conditions, i. e. mainly perpendicular to the outer aerodynamic surface of the shrouding 6d, is decreased as far as possible. This may e. g. be achieved by structural bonding, co-bonding, welding, in-situ application of the inflexible lightweight volume material (17a in Figure 7) or the main load carrying primary structure 16, respectively, or by any other way of fixing the inflexible lightweight volume material (17a in Figure 7) to the main load carrying primary structure 16 such that normal shear loads can be transferred.

According to one aspect, the inflexible lightweight volume material (17a in Figure 7) must not necessarily be made as a single integral component but can instead be made of several separated subparts, which do not have to be connected to each other as long as the parts are not too small, so that the local support of the main load carrying primary structure 16 as well as the support of a respective outer skin, e. g. outer covering layer (21 in Figure 7) of the shrouding 6d, is guaranteed.

Figure 6 shows the main load carrying primary structure 16 of the shrouding 6d of the thrust producing unit 3d of Figure 5. According to one aspect, the main load carrying primary structure 16 comprises at least one main load carrying ring 19a and is by way of example implemented as a single main load carrying ring 19a.

Figure 7 shows the shrouding 6d of the thrust producing unit 3d of Figure 5 with the main load carrying primary structure 16 of Figure 6, which is exemplarily embodied as the single main load carrying ring 19a of Figure 6. Preferably, the main load carrying ring 19a is hollow. Furthermore, according to one aspect, the main load carrying ring 19a comprises metal, plastic and/or fiber reinforced polymers.

As described above, according to an embodiment that is not covered by the claimed invention, the stiffening secondary structure 17 encapsulates in Figure 7 the main load carrying primary structure 16 at least partly. The stiffening secondary structure 17 is preferably rigidly attached to the main load carrying primary structure 16 for enabling transfer of normal and shear loads from the stiffening secondary structure 17 to the main load carrying primary structure 16. Such a rigid attachment may e. g. be obtained by means of structural bonding, co-bonding, welding, and/or in-situ application of the stiffening secondary structure 17 or the main load carrying primary structure 16. Illustratively, the stiffening secondary structure comprises an exemplary rigid resp. inflexible lightweight volume material 17a.

According to one aspect, the stiffening secondary structure 17 comprises a shaping that provides predetermined aerodynamic properties to the air duct 15, which is defined by the shrouding 6d. Preferably, an outer covering layer 21 encapsulates the main load carrying primary structure 16 and the stiffening secondary structure 17 at least partly. This outer covering layer 21 is preferably provided for protecting at least the stiffening secondary structure 17 against environmental impacts and/or for obtaining at least a predetermined surface state of the stiffening secondary structure 17. This predetermined surface state is e. g. based on at least one of a predefined hardness, smoothness, water tightness, airflow influencing micro-structure and/or acoustic noise influencing porosity. In particular, according to one aspect the outer covering layer 21 is a non-load carrying foil or surface finish.

It should be noted that the outer covering layer 21 is merely an optional feature of the shrouding 6d for defining a skin-like outer surface of the shrouding 6d, which represents a respective aerodynamic surface of the shrouding 6d. This outer covering layer 21 may be useful in case of a special requirement of the aerodynamic surface only and can be omitted if not required. In particular, the outer covering layer 21 can be useful to protect the inflexible lightweight volume material 17a against environmental impacts such as rain, air, humidity, dust, and so on, if the inflexible lightweight volume material 17a does not possess these properties by itself. Furthermore, on top the outer covering layer 21 serves as additional layer or coating with additional superficial features according to one aspect, such as texturing, e. g. for passive or even active influence on the boundary layer of the airflow, porosity, or smoothness, which can in addition easily be used for a quickly removable branding or print. It may also be used to minimize damages caused by bird strike, lightning strike in case of an electro-conductive skin, and may help to keep the inflexible lightweight volume material 17a in place in case of local damage, so that the rotor assembly 7d resp. other rotating parts of the thrust producing unit 3d are not impacted in case of such local damage.

Figure 8 shows the shrouding 6d of the thrust producing unit 3d of Figure 5 with the rotor assembly 7d of Figure 1 to Figure 4 for illustrating an exemplary rotor plane 22 defined by the rotor assembly 7d. Figure 8 further illustrates a possible upper extreme position 23a of the rotor plane 22, as well as a lower extreme position 23 of the rotor plane 22.

According to one aspect, a range 23c is defined between the upper and lower extreme positions 23a, 23b. Preferably, the rotor plane 22 is arranged within this range 23c.

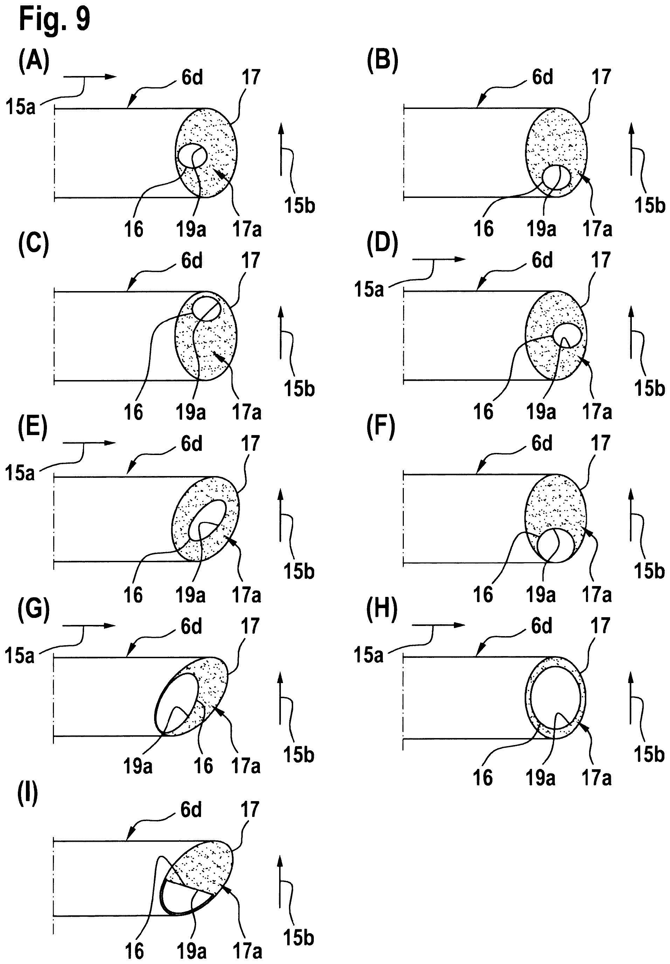

Figure 9 shows the shrouding 6d of the thrust producing unit 3d of Figure 5 for further illustrating exemplary locations of the main load carrying ring 19a of Figure 6, which defines the main load carrying primary structure 16, within the stiffening secondary structure 17 that comprises the inflexible lightweight volume material 17a and illustratively exhibits an oval cross-section.

Part (A) of Figure 9 shows a first variant, according to which the main load carrying ring 19a, which illustratively exhibits a circular cross-section, is arranged with respect to a duct radial direction 15a at an innermost position of the stiffening secondary structure 17. With respect to a duct height direction 15b, the main load carrying ring 19a is positioned at a central position of the stiffening secondary structure 17.

Part (B) of Figure 9 illustrates the main load carrying ring 19a with the exemplary circular cross-section in a lowermost position within the stiffening secondary structure 17 with respect to the duct height direction 15b.

Part (C) of Figure 9 illustrates the main load carrying ring 19a with the exemplary circular cross-section in an uppermost position of the stiffening secondary structure 17 with respect to the duct height direction 15b.

Part (D) of Figure 9 illustrates the main load carrying ring 19a with the exemplary circular cross-section in an outermost position within the stiffening secondary structure 17 with respect to the duct radial direction 15a. Furthermore, with respect to the duct height direction 15b, the main load carrying ring 19a is shown in a central position within the stiffening secondary structure 17.

Part (E) of Figure 9 shows the main load carrying ring 19a, which now exemplarily exhibits an oval cross-section, in a central position within the stiffening secondary structure 17 with respect to the duct radial direction 15a. Furthermore, the main load carrying ring 19a is arranged also in a central position with respect to the duct height direction 15b.

Part (F) of Figure 9 shows the main load carrying ring 19a with the exemplary circular cross-section in a lowermost position within the stiffening secondary structure 17 with respect to the duct height direction 15b. However, in contrast to part (B) of Figure 9, the main load carrying ring 19a is now exemplarily defining an outer surface of the shrouding 6d at least partly, such that part (F) shows an embodiment that is not covered by the claimed invention.

Part (G) of Figure 9 shows the main load carrying ring 19a, which again exemplarily exhibits the oval cross-section and which is illustrated with respect to the duct radial direction 15a in an innermost position and with respect to the duct height direction 15b in a lowermost position of the stiffening secondary structure 17, such that the main load carrying ring 19a preferably forms at least partly an outer surface of the shrouding 6d, such that part (G) shows an embodiment that is also not covered by the claimed invention.

Part (H) of Figure 9 shows the main load carrying ring 19a, which again exemplarily exhibits the oval cross-section and which is now centered in the stiffening secondary structure 17 with respect to the duct radial direction 15a and the duct height direction 15b.

Part (I) of Figure 9 shows the main load carrying ring 19a with a cross-section of a portion of an oval. The main load carrying ring 19a is with respect to the duct height direction 15b again arranged in a lowermost position within the stiffening secondary structure 17.

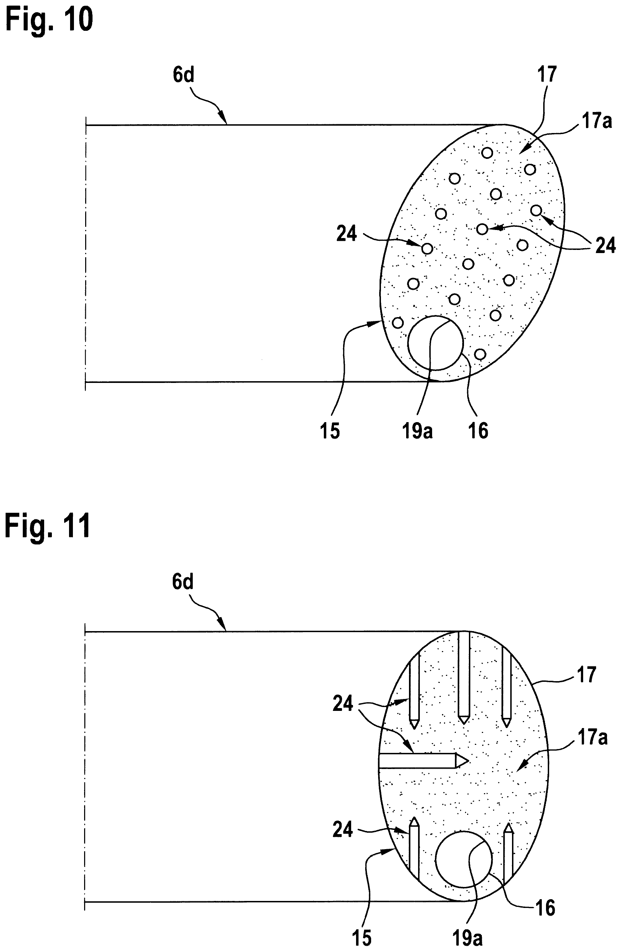

Figure 10 shows the shrouding 6d of the thrust producing unit 3d of Figure 5 with the main load carrying primary structure 16 that is embodied as the main load carrying ring 19a, which is encapsulated by the stiffening secondary structure 17 having the inflexible lightweight volume material 17a. By way of example, the main load carrying ring 19a again exemplarily exhibits a circular cross-section and is arranged in a lowermost position of the stiffening secondary structure 17, which again exemplarily exhibits an oval cross-section. According to one aspect, the stiffening secondary structure 17 comprises a plurality of weight reducing holes and/or cavities 24 for reducing weight of the shrouding 6d.

By way of example, the holes and/or cavities 24 may be provided in any direction of the stiffening secondary structure 17. Furthermore, they can be created during a respective manufacturing process of the stiffening secondary structure 17. This is advantageously not limited to lightning holes and cavities, but also includes integrally milled cable channels. In fact, there is no impact on the load carrying capability of the stiffening secondary structure 17, so that the holes and/or cavities 24 may be of any shape, size and may even intersect each other arbitrarily and as needed for system installation.

Figure 11 shows the shrouding 6d of the thrust producing unit 3d of Figure 5 with the main load carrying primary structure 16 that is embodied by the main load carrying ring 19a, which is encapsulated in the inflexible lightweight volume 17a forming the stiffening secondary structure 17. By way of example, the main load carrying ring 19a again exemplarily exhibits a circular cross-section and is arranged in a lowermost position of the stiffening secondary structure 17, which again exemplarily exhibits an oval cross-section.

In analogy to Figure 10, the stiffening secondary structure 17 is provided with the holes and/or the cavities 24. According to one aspect, the holes and/or cavities 24 are now implemented by way of example as drill holes that are drilled into the inflexible lightweight volume material 17a.

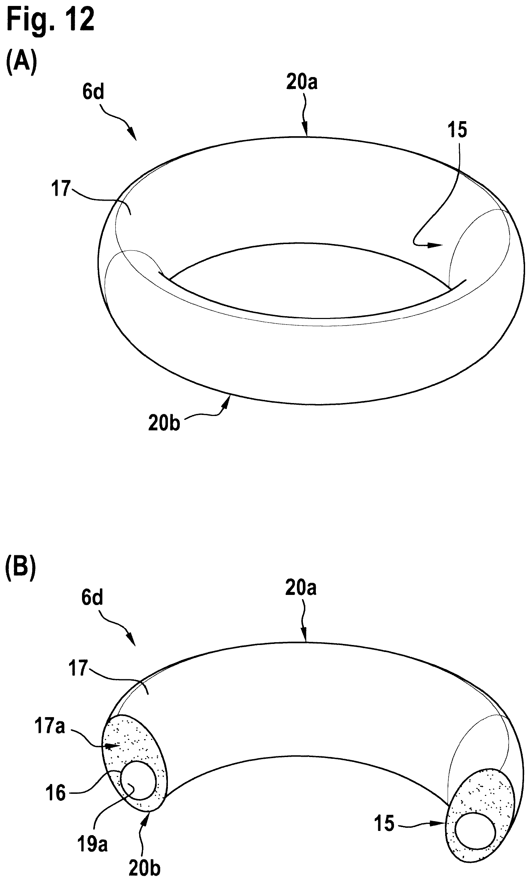

Figure 12 shows the shrouding 6d of the thrust producing unit 3d of Figure 5 that defines the air duct 15 that is actually delimited by the air inlet region 20a and the air outlet region 20b. According to part (A) of Figure 12, the shrouding 6d exhibits an oval cross-section and has an annular shaping with the stiffening secondary structure 17 defining an outer aerodynamic surface of the shrouding 6d. According to part (B) of Figure 12, the inflexible lightweight volume material 17a of the stiffening secondary structure 17 completely encapsulates the main load carrying ring 19a that forms the main load carrying primary structure 16.

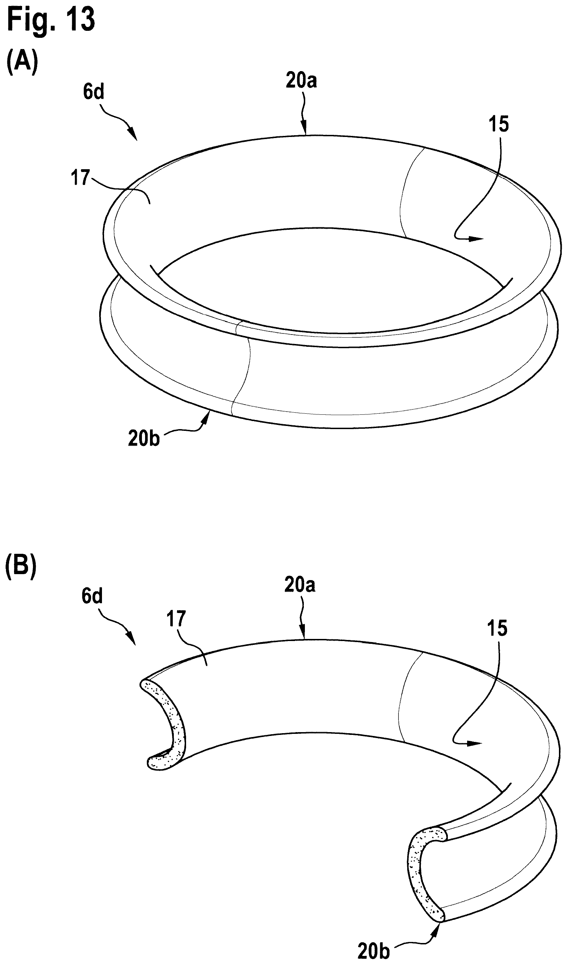

Figure 13 shows the shrouding 6d of the thrust producing unit 3d of Figure 5, which is embodied according to an alternative variant. According to part (A) of Figure 13, the shrouding 6d defines the air duct 15 by means of the stiffening secondary structure 17, which in contrast to Figure 12 now exhibits a C-shaped resp. semi-circular cross-section. Part (B) illustrates the C-shaped cross-section of the shrouding 6d in detail.

It should be noted that in all exemplary realizations of the shrouding 6d that were described with respect to Figure 5 to Figure 13, the main load carrying primary structure 16 is implemented by means of the single main load carrying ring 19a. Likewise, the stiffening secondary structure 17 is only implemented by means of the inflexible lightweight volume material 17a. However, other implementations are likewise possible and contemplated as described hereinafter.

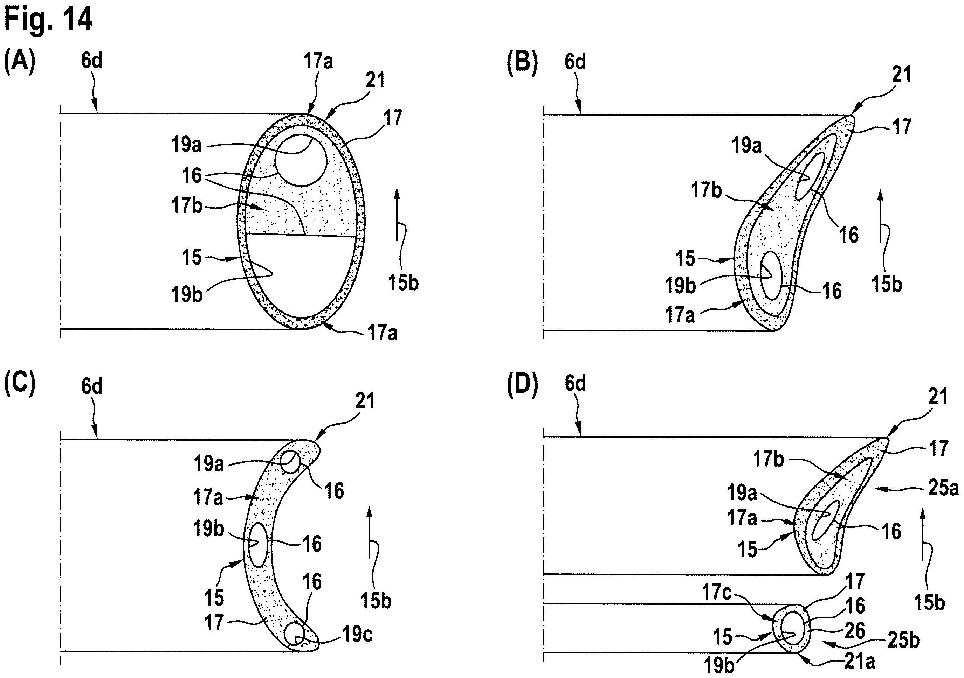

Figure 14 shows further variants of the shrouding 6d of the thrust producing unit 3d of Figure 5. According to part (A) of Figure 14, the shrouding 6d comprises the main load carrying 19a, which illustratively comprises a circular cross-section. The main load carrying ring 19a is encapsulated by an inflexible respectively rigid lightweight volume material 17b.

According to one aspect, the main load carrying primary structure 16 is further implemented with an additional main load carrying ring 19b, which illustratively comprises a cross-section of sectional oval shape. The additional main load carrying ring 19b and the inflexible lightweight volume material 17b are encapsulated by the inflexible lightweight volume material 17a of the stiffening secondary structure 17, illustratively in a centered position with respect to the duct height direction 15b. Furthermore, by way of example the main load carrying rings 19a, 19b, are arranged such that the main load carrying ring 19a is positioned close to a flat side of the main load carrying ring 19b.

Part (B) of Figure 14 illustrates a further possible shaping of the shrouding 6d, which is now by way of example slightly ear-shaped in the duct height direction 15b. Furthermore, the shrouding 6d now illustratively comprises the main load carrying rings 19a, 19b, which are both according to a variant now embodied with an oval cross-section and together encapsulated within the inflexible lightweight volume material 17b. However, the main load carrying rings 19a, 19b are spaced apart from each other in the duct height direction 15b. Furthermore, the inflexible lightweight volume material 17b that completely encapsulates the main load carrying rings 19a, 19b is now further illustratively completely encapsulated by the inflexible lightweight volume material 17a.

Part (C) of Figure 14 shows still another variant of the shrouding 6d with a slightly C-shaped cross-section in the duct height direction 15b. According to one aspect, the main load carrying primary structure 16 now comprises the main load carrying ring 19a, the main load carrying ring 19b and an additional main load carrying ring 19c. By way of example, the main load carrying rings 19a, 19c are provided with circular cross-sections and arranged closed to uppermost resp. lowermost positions inside of the stiffening secondary structure 17, i. e. the inflexible lightweight volume material 17a thereof. The main load carrying ring 19b is again oval in cross-section and also completely encapsulated within the inflexible lightweight volume material 17a in analogy to the main load carrying rings 19a, 19c. In the duct height direction 15b, the main load carrying ring 19b is preferably arranged in a central position.

Part (D) of Figure 14 shows the shrouding 6d, which now illustratively comprises an upper shrouding component 25a and a lower shrouding component 25b that is spaced apart from the upper shrouding component in the duct height direction 15b of the air duct 15, which is defined by both shrouding components 25a, 25b together. Each one of the upper shrouding component 25a and the lower shrouding component 25b is provided with the main load carrying primary structure 16 and the stiffening secondary structure 17 that encapsulates the main load carrying primary structure 16. Illustratively, the stiffening secondary structure 17 of the lower shrouding component 25b is provided with an outer covering layer 21a, which may be embodied similar to the outer covering layer 21, which illustratively encloses the upper shrouding component 25a.

In other words, according to part (D) of Figure 14, the shrouding 6d does not consist of a single shrouding component made of a single aerodynamic volume, but comprises two separated sub-shroudings. More generally, the shrouding 6d can also be composed by two or more locally or completely separated sub-shroudings or even comprise a variable shape changing from one single cross-section to two or more different cross-sections and, then, back to a single cross-section. For instance, the shrouding 6d of Figure 5 may have different cross-sections on its lateral regions 18c, 18d, like the different cross-sections that are provided on its leading edge 18a and its trailing edge 18b of Figure 5.

By way of example, the upper shrouding component 25a is again ear-shaped and comprises the main load carrying ring 19a of the main-load carrying primary structure 16, which is encapsulated within the inflexible lightweight volume material 17b of the stiffening secondary structure 17. The inflexible lightweight volume material 17b is according to one aspect completely encapsulated by the inflexible lightweight volume material 17a.

The lower shrouding component 25b exemplarily comprises a smaller radius resp. diameter than the upper shrouding component 25a and is illustratively provided with the main load carrying ring 19b of the main load carrying primary structure 16. The main load carrying ring 19b is encapsulated completely in an inflexible lightweight volume material 17c of the stiffening secondary structure 17, which exemplarily defines a stiffening secondary structure 26.

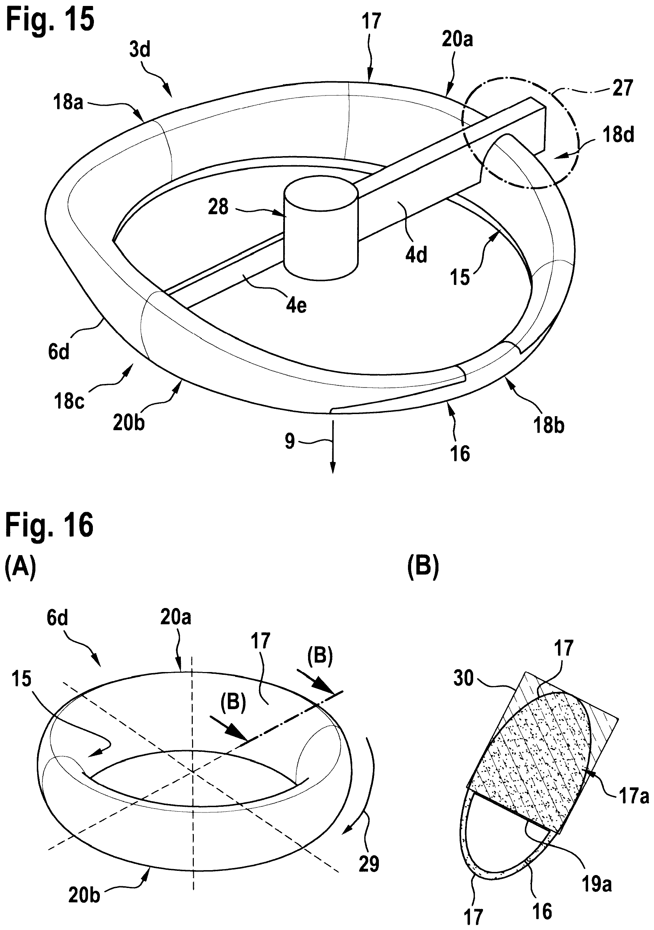

Figure 15 shows the thrust producing unit 3d with the shrouding 6d of Figure 5. However, in contrast to Figure 5, an attachment section 27 of the thrust producing unit 3d for attachment to the aircraft airframe 2 of the multirotor aircraft 1 of Figure 1 to Figure 4 is highlighted. Furthermore, an exemplary motor/gearbox fairing 28 is included.

Figure 16 shows the shrouding 6d of the thrust producing unit 3d of Figure 5 according to still another variant. More specifically, part (A) of Figure 16 shows the shrouding 6d with the stiffening secondary structure 17 that defines the air duct 15 having the air inlet region 20a and the air outlet region 20b. Furthermore, an exemplary peripheral shrouding direction 29 is illustrated.

In part (B) of Figure 16, a cross-sectional view of the shrouding 6d in the peripheral shrouding direction 29 of part (A) is shown for illustrating an exemplary realization. More specifically, the shrouding 6d according to part (B) is shown with the stiffening secondary structure 17 that comprises the inflexible lightweight volume material 17a that completely encapsulates the main load carrying primary structure 16, which is again exemplarily defined by the main load carrying ring 19a having a cross-section of an oval section.

Part (B) further illustrates an exemplary rigid lightweight volume material separation plane 30. In other words, according to Figure 16 different regions of the shrouding 6d in the peripheral direction 29 may be provided with different inflexible lightweight volume materials. In other words, according to one aspect the main load carrying ring 19a is embodied as a continuous, respectively uninterrupted structure in the peripheral shrouding direction 29, while the inflexible lightweight volume material 17a is an incontinuous structure with at least one and possibly several separation planes, such as the rigid lightweight volume material separation plane 30.

Finally, it should be noted that modifications of the above described aspects of the present invention are also within the common knowledge of the person skilled in the art. These modifications, provided that they are covered by the wording of the appended claims, also form of the present invention.

For instance, if a very smooth and clean outer surface of the shrouding of the thrust producing unit is required, such a smooth surface can e. g. be achieved by using an inflexible lightweight volume gradient material with decreased porosity close to the outer surface resp. skin, i. e. a material with so-called gradient density, or an inflexible lightweight volume material with two or more different properties, such as e. g. different densities, porosity, stiffnesses, etc. can be used. Thus, in specific applications a separate inner volume material and another outer volume material as e. g. illustrated in Figure 14 can be used. Alternatively, such a smooth skin can be provided with micro-holes, e. g. by means of drilling, which open the outer surface to inner cavities to reduce noise.

In other words, the inflexible lightweight volume material that is preferably used should comprise a comparatively low density or a certain porosity, and as it is by definition not in a respective primary load path of the shrouding and, thus, not load carrying, it normally exhibits a high damping factor and/or noise reducing property. Thus, the inflexible lightweight volume material can significantly reduce noise emitted by the thrust producing units, in particular by the associated rotor assemblies at respective wing tips, which are enclosed distant to the air duct where noise generation is normally very high, so that the foam-like volume material will be extremely efficient due to its proximity to the tips of the rotor blades of the rotor assembly.

According to one aspect, an underlying thickness of all materials used for implementing the shrouding can advantageously be reduced for weight saving purposes. More specifically, the shrouding according to the present invention can be designed in a way that the inflexible lightweight volume material protects the main load carrying primary structure such that an overall system resp. the shrouding can be regarded as extremely damage tolerant, hence mitigating threats of tool drop, mishandling, hail impact or, in the worst case, blade impact. In all these cases, only the foam-like lightweight material of the stiffening secondary structure will be damaged, leaving the main load carrying primary structure intact and undamaged. In other words, the stiffening secondary structure has a protection function with respect to the main load carrying primary structure and, if an outer covering layer is provided, the latter allows to go closer to the real material that is usable in an underlying sizing process since no BVIDs, scratches, damage by hail strike, etc., which may occur during regular operation, need to be taken into account in the sizing process.

According to one aspect, repair costs of the shrouding can be reduced if the inflexible lightweight volume material of the stiffening secondary structure is used for protecting the main load carrying primary structure, as the inflexible lightweight volume material is generally much cheaper than a respective material that is used for implementing the main load carrying primary structure. Furthermore, in most cases the main load carrying primary structure must no longer be inspected as long as the stiffening secondary structure is intact or only comprises minor cosmetical damages.

According to one aspect, the shrouding may have a cross-section that allows to implement an air inlet region and an air outlet region with differing diameters. For instance, in Figure 9, part (E), the shrouding has an oval cross-section with an oval that is inclined such that the air inlet region exhibits a greater diameter than the air outlet region. In contrast thereto, e. g. in Figure 9, part (A), the air inlet region and the air outlet region exhibit an at least essentially identical diameter.

According to one aspect, the main load carrying primary structure can be positioned at various different positions within the stiffening secondary structure of the shrouding, as illustrated above by way of example with respect to Figure 9. In other words, the main load carrying primary structure can be moved within a respective outer aerodynamic shape of the shrouding to a position where it does not intersect with a structural support respectively stator beam that supports the rotor assembly. This is important as the shrouding is usually part of a complete motor/rotor/duct lifting system and, thus, structural supports that support the motor and take over rotor assembly loads are connected to an aircraft airframe at almost the same position. This generally leads to difficulties in the integration of both main structural items as both carry significant loads and need to be connected to the aircraft airframe thoroughly.

Furthermore, a respective vertical position of the main load carrying primary structure within the stiffening secondary structure can be adapted to a location within the stiffening secondary structure which shows a best compromise between structuremechanical needs, aerodynamics, noise, integration, and so on. This is particularly relevant if one or more additional stator beams or struts are needed to fix the shrouding to a respective motor/rotor system in the middle of the shrouding.

According to one aspect, the main load carrying primary structure consists of a main load carrying ring, which is preferably significantly stiffened and, thus, may comprise a reduced wall thickness. This is required as respective inflexible lightweight volume materials are attached to the main load carrying primary structure for load transfer and as the inflexible lightweight volume material has a high out-of-plane inertia compared to the thin-walled main load carrying ring.

According to one aspect, a cable routing path is arranged on an outer surface of the inventive shrouding so that installation efforts and, consequently costs, are significantly reduced.

Finally, it should be noted that the inflexible lightweight volume material is preferably a non-structural foam-like material that is provided with a secondary structural function in view of the fact that the lightweight volume material is needed to eliminate secondary movements of the main load carrying primary structure. In other words, the inflexible lightweight volume material should not be flexible as solely forming/shaping item or transferring aerodynamic loads to a rigid sub-structure only.

### Reference List

- 1: Multirotor aircraft
- 1a: Aircraft longitudinal direction
- 1b: Aircraft lateral direction
- 2: Aircraft airframe
- 2a: Aircraft airframe internal volume
- 2b: Aircraft airframe width
- 3: Thrust producing units
- 3a, 3b, 3c, 3d: Thrust producing unit
- 4: Thrust producing units structural supports
- 4a, 4b, 4c, 4d: Thrust producing unit structural support
- 4e: Stator beam
- 5: Gearbox fairings
- 5a, 5b, 5c, 5d: Gearbox fairing
- 6: Shrouding units
- 6a, 6b, 6c, 6d: Shrouding
- 7: Upper rotor assemblies
- 7a, 7b, 7c, 7d: Upper rotor assembly
- 8: Lower rotor assemblies
- 8a, 8b, 8c, 8d: Lower rotor assembly
- 9: Thrust producing airstream direction
- 10: Ground
- 10a: Vertical resp. perpendicular reference line
- 11: Longitudinal inclination angles
- 11a, 11b: Longitudinal inclination angle
- 12: Rotor axes
- 12a, 12b, 12c, 12d: Rotor axis
- 13: Lateral inclination angles
- 13a, 13b: Lateral inclination angle
- 14: Engine and/or engine fitting
- 15: Air duct
- 15a: Duct radial direction
- 15b: Duct height direction
- 16: Main load carrying primary structure
- 17: Stiffening secondary structure
- 17a, 17b, 17c: Rigid lightweight volume materials
- 18a: Leading edge
- 18b: Trailing edge
- 18c, 18d: Lateral regions
- 19a, 19b, 19c: Main load carrying rings
- 20a: Air inlet region
- 20b: Air outlet region
- 21, 21a: Outer covering layer
- 22: Rotor plane
- 23a: Upper extreme position of rotor plane
- 23b: Lower extreme position of rotor plane
- 23c: Range between upper and lower extreme positions
- 24: Weight reducing holes/cavities
- 25a: Upper shrouding component
- 25b: Lower shrouding component
- 26: Stiffening secondary structure
- 27: rotary wing aircraft attachment section
- 28: motor/gearbox fairing
- 29: peripheral shrouding direction
- 30: Rigid lightweight volume material separation plane

## Claims

1. A multirotor aircraft (1) comprising a plurality of thrust producing units (3a, 3b, 3c, 3d), each thrust producing unit (3d) of the plurality of thrust producing units (3a, 3b, 3c, 3d) being inclined in a lateral direction (1b) of the multirotor aircraft (1) and comprising at least one rotor assembly (7d) and a shrouding (6d), the shrouding (6d) surrounding the rotor assembly (7d) in circumferential direction, and forming an air duct (15) that is associated with the at least one rotor assembly (7d) and axially delimited by an air inlet region (20a) and an air outlet region (20b), and wherein the shrouding comprises a main aerodynamic load carrying primary structure (16) and a stiffening secondary structure (17) that completely encapsulates the main aerodynamic load carrying primary structure (16) and comprises at least one inflexible lightweight volume material, wherein the stiffening secondary structure (17) reduces elastic movements of the main aerodynamic load carrying primary structure (16) under loading conditions.

2. The multirotor aircraft (1) of claim 1,
**characterized in that** the at least one inflexible lightweight volume material comprises at least one of foam, gradient foam or balsa wood.

3. The multirotor aircraft (1) of claim 1,
**characterized in that** the main aerodynamic load carrying primary structure (16) comprises at least one main aerodynamic load carrying ring (19a, 19b, 19c).

4. The multirotor aircraft (1) of claim 3,
**characterized in that** the at least one main aerodynamic load carrying ring (19a, 19b, 19c) is hollow.

5. The multirotor aircraft (1) of claim 3,
**characterized in that** the at least one main aerodynamic load carrying ring (19a, 19b, 19c) comprises metal, plastic, and/or fiber reinforced polymers.

6. The multirotor aircraft (1) of claim 1,
**characterized in that** the stiffening secondary structure (17) is rigidly attached to the main aerodynamic load carrying primary structure (16) for enabling transfer of normal and shears loads from the stiffening secondary structure (17) to the main aerodynamic load carrying primary structure (16).

7. The multirotor aircraft (1) of claim 6,
**characterized in that** the stiffening secondary structure (17) is rigidly attached to the main aerodynamic load carrying primary structure (16) by means of structural bonding, co-bonding, welding, and/or in-situ application of the stiffening secondary structure (17) or the main aerodynamic load carrying primary structure (16).

8. The multirotor aircraft (1) of claim 1,
**characterized in that** the stiffening secondary structure (17) comprises a shaping that provides predetermined aerodynamic properties to the air duct (15).

9. The multirotor aircraft (1) of claim 1,
**characterized in that** the shrouding (6d) comprises an outer covering layer (21) that encapsulates the main aerodynamic load carrying primary structure (16) and the stiffening secondary structure (17) at least partly.

10. The multirotor aircraft (1) of claim 9,
**characterized in that** the outer covering layer (21) is provided for protecting at least the stiffening secondary structure (17) against environmental impacts and/or for obtaining at least a predetermined surface state of the stiffening secondary structure (17).

11. The multirotor aircraft (1) of claim 10,
**characterized in that** the predetermined surface state is based on at least one of a predefined hardness, smoothness, water tightness, airflow influencing micro-structure and/or acoustic noise influencing porosity.

12. The multirotor aircraft (1) of claim 9,
**characterized in that** the outer covering layer (21) is a non-load carrying foil or surface finish.

13. The multirotor aircraft (1) of claim 1,
**characterized in that** the stiffening secondary structure (17) comprises a plurality of weight reducing holes and/or cavities (24) for reducing weight of the shrouding (6d).

14. The multirotor aircraft (1) of claim 1,
**characterized in that** the shrouding (6d) comprises an upper shrouding component (25a) and a lower shrouding component (25b) that is spaced apart from the upper shrouding component (25a) in height direction (15b) of the air duct (15), each one of the upper shrouding component (25a) and the lower shrouding component (25b) being provided with the main aerodynamic load carrying primary structure (16) and the stiffening secondary structure (17) that completely encapsulates the main aerodynamic load carrying primary structure (16).

## Patentansprüche

1. Multirotorflugzeug (1 mit einer Mehrzahl von schuberzeugenden Einheiten (3a, 3b, 3c, 3d), wobei jede schuberzeugende Einheit (3d) der Mehrzahl von schuberzeugenden Einheiten (3a, 3b, 3c, 3d) in einer seitlichen Richtung (1b) des Multirotorflugzeugs (1) geneigt ist und mindestens eine Rotoranordnung (7d) und eine Ummantelung (6d) umfasst, wobei die Ummantelung (6d) die Rotoranordnung (7d) in Umfangsrichtung umgibt und einen Luftkanal (15) bildet, der der mindestens einen Rotoranordnung (7d) zugeordnet ist und axial durch einen Lufteinlassbereich (20a) und einen Luftauslassbereich (20b) begrenzt ist, und wobei die Ummantelung eine eine aerodynamische Hauptlast tragende Primärstruktur (16) und eine versteifende Sekundärstruktur (17) umfasst, welche die die aerodynamische Hauptlast tragende Primärstruktur (16) vollständig einkapselt und mindestens ein unflexibles, leichtes Volumenmaterial umfasst, wobei die versteifende Sekundärstruktur (17) elastische Bewegungen der die aerodynamische Hauptlast tragenden Primärstruktur (16) unter Lastbedingungen reduziert.

2. Multirotorflugzeug (1) nach Anspruch 1,
**dadurch gekennzeichnet, dass** das mindestens eine unflexible leichte Volumenmaterial Schaumstoff, Gradientenschaumstoff und/oder Balsaholz umfasst.

3. Multirotorflugzeug (1) nach Anspruch 1,
**dadurch gekennzeichnet, dass** die die aerodynamische Hauptlast tragende Primärstruktur (16) mindestens einen die aerodynamische Hauptlast tragenden Ring (19a, 19b, 19c) umfasst.

4. Multirotorflugzeug (1) nach Anspruch 3,
**dadurch gekennzeichnet, dass** der mindestens eine die aerodynamische Hauptlast tragende Ring (19a, 19b, 19c) hohl ist.

5. Multirotorflugzeug (1) nach Anspruch 3,
**dadurch gekennzeichnet, dass** der mindestens eine die aerodynamische Hauptlast tragende Ring (19a, 19b, 19c) Metall, Kunststoff und/oder faserverstärkte Polymere umfasst.

6. Multirotorflugzeug (1) nach Anspruch 1,
**dadurch gekennzeichnet, dass** die versteifende Sekundärstruktur (17) an der die aerodynamische Hauptlast tragenden Primärstruktur (16) starr befestigt ist, um die Übertragung von Normal- und Scherlasten von der versteifenden Sekundärstruktur (17) auf die die aerodynamische Hauptlast tragende Primärstruktur (16) zu ermöglichen.

7. Multirotorflugzeug (1) nach Anspruch 6,
**dadurch gekennzeichnet, dass** die versteifende Sekundärstruktur (17) an der die aerodynamische Hauptlast tragenden Primärstruktur (16) mittels strukturellem Kleben, Co-Bonden, Schweißen und/oder In-situ-Anbringung der versteifenden Sekundärstruktur (17) oder der die aerodynamische Hauptlast tragenden Primärstruktur (16) starr befestigt ist.

8. Multirotorflugzeug (1) nach Anspruch 1,
**dadurch gekennzeichnet, dass** die versteifende Sekundärstruktur (17) eine Gestaltung umfasst, die dem Luftkanal (15) vorgegebene aerodynamische Eigenschaften verleiht.

9. Multirotorflugzeug (1) nach Anspruch 1,
**dadurch gekennzeichnet, dass** die Ummantelung (6d) eine äußere Deckschicht (21) umfasst, welche die die aerodynamische Hauptlast tragende Primärstruktur (16) und die versteifende Sekundärstruktur (17) zumindest teilweise einkapselt.

10. Multirotorflugzeug (1) nach Anspruch 9,
**dadurch gekennzeichnet, dass** die äußere Deckschicht (21) vorgesehen ist, um zumindest die versteifende Sekundärstruktur (17) vor Umwelteinflüssen zu schützen und/oder um zumindest einen vorgegebenen Oberflächenzustand der versteifenden Sekundärstruktur (17) zu erhalten.

11. Multirotorflugzeug (1) nach Anspruch 10,
**dadurch gekennzeichnet, dass** der vorgegebene Oberflächenzustand auf einer vorgegebenen Härte, Glätte, Wasserdichtigkeit, einer den Luftstrom beeinflussenden Mikrostruktur und/oder einer den Schall beeinflussenden Porosität basiert.

12. Multirotorflugzeug (1) nach Anspruch 9,
**dadurch gekennzeichnet, dass** die äußere Deckschicht (21) eine nicht tragende Folie oder Oberflächenbeschichtung ist.

13. Multirotorflugzeug (1) nach Anspruch 1,
**dadurch gekennzeichnet, dass** die versteifende Sekundärstruktur (17) eine Mehrzahl von gewichtsreduzierenden Löchern und/oder Hohlräumen (24) zur Gewichtsreduzierung der Ummantelung (6d) umfasst.

14. Multirotorflugzeug (1) nach Anspruch 1,
**dadurch gekennzeichnet, dass** die Ummantelung (6d) eine obere Ummantelungskomponente (25a) und eine untere Ummantelungskomponente (25b) umfasst, die in Höhenrichtung (15b) des Luftkanals (15) von der oberen Ummantelungskomponente (25a) beabstandet ist, wobei sowohl die obere Ummantelungskomponente (25a) als auch die untere Ummantelungskomponente (25b) mit der die aerodynamische Hauptlast tragenden Primärstruktur (16) und der versteifenden Sekundärstruktur (17) versehen ist, welche die die aerodynamische Hauptlast tragende Primärstruktur (16) vollständig umschließt.

## Revendications

1. Aéronef multirotor (1) comprenant une pluralité d'unités de production de poussée (3a, 3b, 3c, 3d), chaque unité de production de poussée (3d) de la pluralité d'unités de production de poussée (3a, 3b, 3c, 3d) étant inclinée suivant une direction latérale (1b) de l'aéronef multirotor (1) et comprenant au moins un ensemble à rotor (7d) et un carénage (6d), le carénage (6d) entourant l'ensemble à rotor (7d) suivant la direction circonférentielle, et formant un conduit d'air (15) qui est associé audit au moins un ensemble à rotor (7d) et délimité axialement par une zone d'entrée d'air (20a) et une zone de sortie d'air (20b), et dans lequel le carénage comprend une structure primaire principale porteuse d'efforts aérodynamiques (16) et une structure secondaire de rigidité (17) qui englobe complètement la structure primaire principale porteuse d'efforts aérodynamiques (16) et comprend au moins un matériau volumique léger et rigide, dans lequel la structure secondaire de rigidité (17) réduit les déplacements élastiques de la structure primaire principale porteuse d'efforts aérodynamiques (16) lorsqu'elle est sollicitée par des efforts.

2. Aéronef multirotor (1) selon la revendication 1,
**caractérisé en ce que** ledit au moins un matériau volumique léger et rigide comprend au moins l'un parmi de la mousse, de la mousse à gradient ou du bois de balsa.

3. Aéronef multirotor (1) selon la revendication 1,
**caractérisé en ce que** la structure primaire principale porteuse d'efforts aérodynamiques (16) comprend au moins un anneau principal porteur d'efforts aérodynamiques (19a, 19b, 19c).

4. Aéronef multirotor (1) selon la revendication 3, **caractérisé en ce que** ledit au moins un anneau principal porteur d'efforts aérodynamiques (19a, 19b, 19c) est creux.

5. Aéronef multirotor (1) selon la revendication 3,
**caractérisé en ce que** ledit au moins un anneau principal porteur d'efforts aérodynamiques (19a, 19b, 19c) comprend du métal, du plastique et/ou des polymères renforcés de fibres.

6. Aéronef multirotor (1) selon la revendication 1,
**caractérisé en ce que** la structure secondaire de rigidité (17) est fixée de façon rigide à la structure primaire principale porteuse d'efforts aérodynamiques (16) pour permettre le transfert d'efforts normaux et en cisaillement de la structure secondaire de rigidité (17) vers la structure primaire principale porteuse d'efforts aérodynamiques (16).

7. Aéronef multirotor (1) selon la revendication 6,
**caractérisé en ce que** la structure secondaire de rigidité (17) est fixée de façon rigide à la structure primaire principale porteuse d'efforts aérodynamiques (16) à l'aide d'une liaison structurelle, d'une liaison hétérogène, d'une soudure, et/ou d'une application insitu de la structure secondaire de rigidité (17) ou de la structure primaire principale porteuse d'efforts aérodynamiques (16).

8. Aéronef multirotor (1) selon la revendication 1,
**caractérisé en ce que** la structure secondaire de rigidité (17) présente un profilage qui apporte des propriétés aérodynamiques prédéterminées au conduit d'air (15).

9. Aéronef multirotor (1) selon la revendication 1, **caractérisé en ce que** le carénage (6d) comprend une couche de revêtement extérieure (21) qui englobe la structure primaire principale porteuse d'efforts aérodynamiques (16) et la structure secondaire de rigidité (17) au moins partiellement.

10. Aéronef multirotor (1) selon la revendication 9,
**caractérisé en ce que** la couche de revêtement extérieure (21) est prévue pour protéger au moins la structure secondaire de rigidité (17) contre les impacts de l'environnement et/ou pour obtenir au moins un état de surface prédéterminé de la structure secondaire de rigidité (17).

11. Aéronef multirotor (1) selon la revendication 10,
**caractérisé en ce que** l'état de surface prédéterminé est basé sur au moins l'un parmi les éléments prédéfinis suivants : dureté, rugosité, étanchéité à l'eau, microstructure influant sur l'écoulement de l'air et/ou porosité influant sur le bruit acoustique.

12. Aéronef multirotor (1) selon la revendication 9,
**caractérisé en ce que** la couche de revêtement extérieure (21) est un profil ou une finition de surface non porteur d'efforts.

13. Aéronef multirotor (1) selon la revendication 1,
**caractérisé en ce que** la structure secondaire de rigidité (17) comprend une pluralité de trous et/ou de cavités (24) afin de réduire le poids du carénage (6d).

14. Aéronef multirotor (1) selon la revendication 1,
**caractérisé en ce que** le carénage (6d) comprend un élément de carénage supérieur (25a) et un élément de carénage inférieur (25b) qui est placé à distance de l'élément de carénage supérieur (25a) suivant la direction de la hauteur (15b) du conduit d'air (15), chacun parmi l'élément de carénage supérieur (25a) et l'élément de carénage inférieur (25b) étant prévu avec la structure primaire principale porteuse d'efforts aérodynamiques (16) et la structure secondaire de rigidité (17) qui englobe complétement la structure primaire principale porteuse d'efforts aérodynamiques (16).
